# EUROPEAN PATENT APPLICATION

(11) **EP 4 181 507 A1**
(43) Date of publication of application: **17.05.2023**
(21) Application number: 22169698.2
(22) Date of filing: 25.04.2022
(51) Int. Cl.: H04N 7/18, G06T 7/292, G08B 13/196

(54) **PRE-EVENT BUFFERING IN A MONITORING SYSTEM**

(71) Applicant: Axis AB, 223 69 Lund (SE)
(72) Inventor: Björgvinsdóttir, Hanna, 223 69 LUND (SE); Skans, Markus, 223 69 LUND (SE); Tydén, Amanda, 223 69 LUND (SE)
(74) Representative: AWA Sweden AB

(57) **Abstract**

A method in a monitoring system (100) comprising a plurality of cameras (110) is disclosed. Each camera is operable in a pre-event buffering mode for temporarily storing a pre-event image stream and in a recording mode for recording an event image stream. In response to a first event being detected (S10) at a first camera (111), a second camera (112) is selected (S20) and operated in the pre-event buffering mode by initiating (S32) the temporary storing of the pre-event image stream, or increasing (S34) an image stream quality of the pre-event image stream. In response to a second event being detected (S40) at the second camera, the second camera is switched (S50) to the recording mode to generate an event image stream, and at least a part of the pre-event image stream concatenated (S60) into the event image stream recorded in the recording mode.

## Description

### Technical field

The present invention relates to monitoring systems comprising a plurality of cameras, and to methods in such systems.

### Background

Monitoring systems, comprising a plurality of cameras, are commonly used for gaining knowledge about objects and events in a specific surrounding or scene. The cameras of such a multi-device system may be distributed geographically to allow for, e.g., detection of unauthorized access and criminal actions, and for tracking movements within the monitored surrounding or scene.

Continuous recording typically generates large amounts of data acquired by each camera. Analyzing and storing large amounts of video footage is known to consume lots of time and resources. Therefore, it is a common measure to activate the recording only in response to a detected event. However, in order to not miss the critical moment that triggered the recording, the cameras may employ pre-event buffering. Pre-event buffering involves constantly pre-loading the video into a certain area of memory referred to as a "pre-buffer", so the video can be pre-pended to a recording triggered by a detected event. In other words, during pre-event buffering a camera may continuously pre-record video and constantly re-write video older than for example 30 seconds to conserve space. When recording is triggered, the contents of the pre-buffer are concatenated into the recording.

As mentioned above, the pre-event buffering of today is an example of efforts to reduce time and power consumption of monitoring systems. However, the overall strive for energy savings motivates improvements that enable more efficient and power conserving monitoring systems.

### Summary

An object of the present invention is to provide techniques for reducing the power consumption in monitoring systems comprising a plurality of cameras.

According to a first aspect, a method in a monitoring system comprising a plurality of cameras is provided, wherein each camera is operable in a pre-event buffering mode for temporarily storing a pre-event image stream and in a recording mode for recording an event image stream. In response to a first event being detected at a first camera of the system, a second camera of the plurality of cameras is selected and operated in the pre-event buffering mode. The pre-event buffering mode comprises initiating the temporary storing of the pre-event image stream or increasing an image stream quality of the pre-event image stream. In response to a second event being detected at the second camera, the second camera is switched to the recording mode to generate an event image stream. At least a part of the pre-event image stream, temporarily stored in the pre-event buffering mode, is concatenated into the event image stream recorded in the recording mode. The first event and the second event may preferably relate to the same event, such as the appearance or presence of the same object or action in the field of view of the respective cameras. However, it will be appreciated that in some embodiments the recording in the second camera alternatively, or additionally, may be triggered by the detection of another event at the second camera, that is, an event not related to the event detected at the first camera.

The present invention is based on the realization that power and data storage resources can be saved by employing a selective pre-buffering approach in which the pre-buffering is initiated, or performed with an increased image stream quality, in one or several of the cameras in response to an event being detected at a first camera of the system. Put differently, the invention allows for a pre-event buffering to be performed in a subset of cameras, such as the second camera, instead of all cameras of the system. This allows the remaining cameras of the system, which are not operated in the pre-event buffering mode, to remain in a low-energy mode with no pre-event buffering or pre-buffering at a reduced image stream quality to reduce power consumption and save data storage resources. The low-energy mode may also be referred to as a low-quality mode or a standby mode.

The second camera may be selected based on an estimated probability that the event, detected at the first camera, will appear in the field of view of the second camera. The selection of the camera, as well as the length of the pre-buffer, may further be based on an estimated time of appearance of the event at the second camera. Various examples of how the selection may be performed will be discussed in greater detail in connection with various embodiments of the invention. However, a merit of actively selecting which of the cameras to operate in the pre-event buffering mode, and possibly when, is that a more efficient use of the pre-event buffering can be achieved.

Further, by switching the second camera to the recording mode first when an event actually is detected at the second camera, a further reduction in power consumption and data storage usage may be achieved, especially compared to systems where an event at a first camera triggers a recording or pre-buffering at all cameras of the system.

To further increase the efficiency of the system, the second camera may return to the low-energy mode after the recording mode. The low-energy mode may be resumed when the event is no longer to be detected in the field of view of the second camera, or after a predetermined lapse of time. Alternatively, the second camera may switch from the recording mode directly to the pre-event buffering mode in response to a trigger indicating that an event is detected at any of the other cameras of the system.

With the present invention, a more precise and efficient use of the pre-event buffering mode and the recording mode may be obtained.

The monitoring system may be used for keeping an environment, such as a geographical location or area, under surveillance or observation. The terms "surveillance" and "monitoring" may be used interchangeably in the present disclosure.

The term "event" may relate to the presence of an object, a movement of the object, an action performed by the object, or a state of the object. In some examples, a detected event at a camera of the system may be understood as the presence of an object being detected in the field of view of the camera, or a (possibly irregular or unexpected) movement, action or state of the object. As mentioned above, the event detected at the second camera may correspond to the event detected at the first camera, thus relating to the same object or action. In other implementations, however, the event detected at the second camera may differ from the event detected at the first camera.

The pre-event buffering can be distinguished from recording in that the former involves temporarily storing the image stream, preferably in a local memory area such as a pre-buffer, whereas the recording may involve streaming the image stream to another node, such as a client or a video management system, or storing the recorded data (typically together with the pre-event image stream) locally in the camera for transmission to another node at a later point in time. The transmission may for instance be delayed until a communication channel and/or external power source is available. The recording often involves image processing, such as encoding, which is known to consume more processing power compared to the pre-event buffering. As the pre-event image stream generally may be re-written to the buffer, the pre-event image stream may be associated with a more volatile nature compared to the event image stream.

In an implementation, the second camera may be a portable camera, such as body worn camera, configured to be powered by a battery when used in the field (i.e., when worn by a person, such as a patrolling police). To save battery resources, the camera may be configured to store the recorded image data locally when used in the field. The image date may also be stored locally in the camera for later transmission when a communication channel is available. The inventive concept may thus be implemented also in cameras not having a constant access to communication channels, such as cellular network access. The locally stored image data (typically including the pre-event image stream) may be transmitted to another node, such as a cloud-based storage or an image data management system once the camera is connected to an external power source and/or communication channel, such as a docking station or charging station with wired or wireless communication functionality.

Operating the second camera in the pre-event buffering mode may involve either initiating the temporary storing or increasing the image stream quality of a pre-buffer image stream. Thus, it will be understood that the second camera in a first option may be arranged in an initial state in which it is not pre-event buffering, and that it upon detection of an event at the first camera may assume a state in which it starts pre-event buffering. In another option, the second camera may be arranged in an initial state in which it already is pre-buffering, and that it upon detection of an event at the first camera is caused to increase a video quality of the pre-buffering image stream and thereby enter the pre-event buffering mode. The video quality may for instance be increased by increasing the number of frames stored in the buffer (i.e., frame rate or length of the pre-buffer), a resolution of the stored frames, or a combination of both. As already mentioned, the initial state, in which the camera is not pre-buffering at all or pre-buffering at a low image stream quality (compared to the pre-event buffering mode) may also be referred to as a low-energy mode.

The quality of the pre-event image stream may in some implementations be determined based on a type or classification of the event detected at the first camera. As mentioned above, an event may relate to the presence, state, or movement of an object. The quality of the pre-event image stream may thus be varied based on parameters relating to the object itself or actions associated with the object. Illustrating examples of such parameters include object classification, wherein the class "vehicle" may result in a higher pre-event image stream quality than the class "human". Further, the quality may be determined by an abnormality detection, relating to, for instance, how unusual an object or its trajectory is (compared to historical observations). Less frequent events may for instance result in a higher quality than more frequent events, or vice versa. In yet some examples, the quality may be based on a level of interest of the event. The level of interest may be based on, for instance, object class or timing. Objects belonging to the class "human" may for instance be determined more interesting than objects determined as "non-human", and the quality of the pre-event image stream may thus be higher for humans than non-humans. Further, the level of interest may be based on the time of the day, such that objects appearing in the scene at times when access is restricted (such as in a closed shopping mall) are determined more interesting than otherwise.

Generally, the image frames of the pre-event image stream may be saved to the pre-buffer in a processed format, resulting from the image frames for instance being encoded. It will however be appreciated that it in some examples may be decided not to process some or all of the image frames of the pre-event image stream. Instead, at least some frames can be saved to the pre-buffer in raw format. This may be performed in order to reduce power consumption. The processing of these pre-buffer frames could then be carried out once a decision has been taken to record the pre-buffer image frames.

According to some embodiments, the method may comprise determining a probability of the event detected at the first camera appearing in the field of view of the second camera. It will thus be understood that for such embodiments, the second event may correspond to the first event. Put differently, the first and second event may originate from the same object or action. In an option, the probability may be determined for several or each of the plurality of cameras of the system, and the second camera selected based on the determined probability. The probability may for instance be determined based on a predetermined transition probability map indicating the probability of the event transitioning from the field of view of the first camera into the field of view of another camera of the system. In further examples, the probability may be determined based on a velocity with which an object associated with the event moves in the field of view of the first camera, and/or a location of the object in the field of view of the first camera.

It will be appreciated that the probability may be determined based on data from previously recorded event image streams acquired by the plurality of cameras. Hence, the probability map may be based on previous detections of similar events, that is, historical or statistical information from which the probability of the event detected at the first camera appearing in the field of view of each of the other cameras may be determined. Beneficially, the historical data may serve as training data in a machine learning approach, in which data relating to detection of events at different cameras of the system are analyzed to train a deep learning model configured to determining, for instance, the probability of the event occurring at each of the cameras as well as an estimated time for such an appearance.

In further examples, the probability may be determined based on data relating to the current event that is detected at the first camera. As mentioned above, such data may for instance indicate a velocity or location of an object in the field of view of the first camera. These data may for instance be analyzed to provide an estimated, or extrapolated, trajectory of the moving object and hence predict a future location in the scene or surrounding monitored by the system.

The above approaches may be combined such that the probability of the event detected at the first camera appearing at the second camera is based both on historical data for similar events and data relating to characteristics, such as speed or location, of the event as detected at the first camera.

The probability may further be determined based on a type or classification of the detected event. In some examples, the type or classification may be used to select the second camera and/or exclude one or several of the other cameras of the system. Previous observations may for instance indicate whether certain types of events or objects are likely or unlikely to appear at specific cameras of the system. Those cameras can then be operated accordingly.

The second camera may be selected from the plurality of cameras as the one having the highest determined probability of the event appearing in its field of view. Alternatively, the second camera may be defined as a camera having a determined probability exceeding a predetermined threshold.

According to some embodiments, the method may comprise determining an estimated time of appearance of the event, detected at the first camera, in the field of view of the second camera. The second camera may then be operated in the pre-event buffering mode for a predetermined period of time preceding the estimated time of appearance. Thus, a distinction can be observed between the probability of the event appearing at the second camera at any time, and the probability of the event appearing at a specific time. By determining, or estimating, a probable time of appearance at the second camera, the length of the pre-buffer may be adapted accordingly.

The estimated time of appearance at the second camera may be based on a predetermined probability distribution of arrival times of the event appearing in the field of view of the second camera, a velocity with which an object associated with the event moves in the field of view of the first camera, or a location of the object in the field of view of the first camera. Hence, similar to what is discussed above in connection with embodiments relating to determining the probability of the event appearing the field of view (at any time), the estimated time of appearance at the second camera may be based on an analysis of historical data from previously recorded event image streams, which in this case may be analyzed to indicate how long time it tends to take until an event detected at the first camera is detected at the second camera. Further, similar to above, information such as velocity or location of the object in the field of view of the first camera may be used as input data for estimating the arrival time at the second camera. A relatively low speed may for instance indicate a later arrival time, whereas a relatively high speed may indicate an earlier arrival time.

According to an embodiment, a level of interest of the event detected at the first camera may be determined. The level of interest may then serve as a basis on which the second camera may be operated in the pre-event buffering mode. The level of interest may be based on, for instance, object class or timing as mentioned above. It will also be appreciated that the timing, such as the time of the day or the day of the week, may affect the level of interest. Events occurring at some periods may be more interesting than other, and the quality varied accordingly. The temporary storing of the pre-event image stream may for example be performed during a period of time based on the determined level of interest. Alternatively, or additionally, the image stream quality of the pre-event image stream may be increased to a level that is based on the determined level of interest. Beneficially, this allows for a prioritization to be achieved, wherein highly interesting events may cause the second camera to generate a longer pre-event image stream and/or a pre-event image stream having a higher quality compared to a less interesting event.

According to an embodiment, the pre-event buffering mode may comprise storing the pre-event image stream to a pre-buffer, whereas the recording mode may comprise transmitting at least a part of the stored pre-event image stream and the event image stream to a video management system. The pre-event image stream may preferably by prepended to the event image stream upon transmission. As mentioned above, another option would be to pre-pend the pre-event image stream to the event image stream and store the data locally for later transmission. This may for instance be beneficial in stand-alone systems and body worn cameras, for instance operating on battery.

According to a second aspect, a monitoring system comprising a plurality of cameras is provided, wherein each camera is operable in a pre-event buffering mode for temporarily storing a pre-event image stream in a pre-buffer and in a recording mode for recording an event image stream. The monitoring system comprises circuitry configured to execute an event detecting function configured to detect a first event at a first camera of the system and a camera mode selecting function. The camera mode selecting function is configured to, in response to the event detecting function detecting the first event at the first camera, operate a second camera of the system in the pre-event buffering mode in which the temporary storing of the pre-event image stream is initiated, or in which an image stream quality of the pre-event image stream is increased, and in response to the event detecting function detecting a second event at the second camera, operate the second camera in the recording mode to generate an event image stream. The circuitry is further configured to execute a concatenating function configured to concatenate at least a part of the pre-event image stream, temporarily stored in the pre-event buffering mode, and the event image stream recorded in the recording mode. As already mentioned, the first event and the second event may be different from each other or relate to the same event.

In some embodiments, the circuitry is further configured to execute a probability determining function configured to determine a probability map comprising a probability of an event being detected at each of the cameras of the plurality of cameras as previously described. Further, the camera mode selecting function may be further configured to operate the second camera based on the probability map.

According to a third aspect, a non-transitory computer-readable medium is provided, having stored thereon computer code instructions adapted to carry out the method of the first aspect when executed by a device having processing capability.

According to a fourth aspect a method is provided, involving a portable camera, such as a body worn camera or a camera of a handheld device such as a mobile phone. Similar to the cameras described above in connection with the previous aspects and embodiments, the portable camera may be operable in a pre-event buffering mode for temporarily storing a pre-event image stream and a recording mode for recording an event image stream. The method involves operating the portable camera in the pre-event buffering mode by initiating the temporary storing of the pre-event image stream or increasing an image stream quality of the pre-event image stream. This allows for image data to be captured prior to an event is detected at the portable camera. When the event is detected at the portable camera, the portable camera may be switched from the pre-event buffering mode to the recording mode to generate an event image stream. This event image stream may be streamed to another node, such as an image data management system, or stored locally in the portable camera for later transmission to another node. Preferably, the event image stream may be stored locally until the portable camera is arranged in a docking station providing electrical power and/or a communication channel for transmission of the image data. At least part of the pre-event image stream, which is temporarily stored in the pre-event buffering mode, may be concatenated into the event image stream recorded in the recording mode. Hence, the pre-event image stream may preferably be pre-pended to the event image stream in connection with the event image stream being sent to the local storage of the portable camera.

Similar to the previous aspects the portable camera may be operated in an initial, low-energy mode prior to the pre-event buffering mode to conserve power and save data storage resources. The pre-event buffering mode may be triggered in a similar way as described in connection with the first and second aspects, that is, based on a determined probability an event detected at another camera (such as a stationary camera or another portable camera) appears in the field of view of the portable camera. Reference is made to the above description of such examples and embodiments. However, the triggering of the pre-event buffering mode may in some embodiments differ from the method and system according to the first and second aspects, respectively. The activation of the pre-event buffering mode may instead be based on a field of view matching approach, wherein an overlap (if any) between the field of view of the portable camera and another camera of the system is determined. In case there is a non-negligible or complete overlap in the respective fields of view, the portable camera may be operated in the low-energy mode. In case the overlap is limited or non-existing, the portable camera may be operated in the pre-event buffering mode. In a specific example, a typical environment would be an indoor mall or a city surveillance scenario with a large number of stationary surveillance cameras or other portable cameras. In case the field of view of any of these cameras at least partly overlaps with the field of view of the portable camera, the portable camera may assume the low-energy mode and let the other camera(s) take care of the monitoring, either by pre-buffering, in a pre-buffering mode, or by recording in the recording mode, depending on the situation for this particular camera. The camera taking care of the monitoring may even be operated in a low-energy mode with pre-buffering at a low-quality image stream quality, depending on the current rule set of that camera. In this way, battery time can be saved in the portable camera as it moves into the field of view of another camera, which for instance may be a stationary, grid powered camera. Hence, the present aspect allows the portable camera to conserve power when used in environments monitored by other cameras. When leaving the field of view of these other cameras, such as fixedly installed, grid powered cameras, the pre-event buffering mode of the portable camera may be activated to enable image data to be captured prior to an event is detected, similar to what is described above for the first and second aspects. It should however be noted that the trigger of the recording mode in the portable camera may not necessarily originate from an event previously detected at the camera at least partly sharing (or having a non-overlapping) field of view with the portable camera. Instead, the portable camera may in some embodiments be configured to initiate the recording mode in response to another event being detected in the field of view of the portable camera. In different words, the event triggering the pre-event buffering mode may be different from the event triggering the recording mode.

The field of view matching between the portable camera and another camera may be determined based on a distance between the two cameras. A sufficient overlap may for instance be assumed for all distances below a predetermined limit. Alternatively, or additionally the matching may comprise a determination or estimation of the actual overlap, that is, how much of the scene covered by the field of view of the portable camera is covered also by the field of view of the other camera. In case the entire scene monitored by the portable camera is present also in the field of view of the other camera, this may be considered a complete overlap. The trigger, causing the portable camera to switch to the pre-event buffering mode, may for example be set to overlaps being less than a predetermined limit. In further embodiments, the image stream quality may be increased with a decreasing overlap or increasing distance between the portable camera and the other camera of the system.

The above-mentioned optional additional features of the method according to the first aspect, when applicable, apply to these second and third aspects as well. In order to avoid undue repetition, reference is made to the above.

A further scope of applicability of the present invention will become apparent from the detailed description given below. However, it should be understood that the detailed description and the specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular acts of the methods described as such methods may vary. It is also to be understood that the terminology used herein is for purpose of describing particular embodiments only and is not intended to be limiting. It must be noted that, as used in the specification and the appended claims, the articles "a", "an", "the" and "said" are intended to mean that there are one or more of the elements unless the context clearly dictates otherwise. Thus, for example, reference to "a second camera" or "the second camera" may include several cameras. Furthermore, the words "comprising", "including", "containing" and similar wordings do not exclude other elements or steps.

### Brief description of drawings

The above and other aspects of the present invention will now be described in more detail with reference to the appended figures. The figures should not be considered limiting but are instead used for explaining and understanding. Like reference numerals refer to like elements throughout.
Figure 1 shows an exemplary monitoring system comprising a plurality of cameras according to some embodiments.
Figure 2 is a flow chart of embodiments of a method in a monitoring system.
Figure 3 shows an exemplary system according to an embodiment, comprising a plurality of cameras communicatively coupled to a video management system.
Figure 4 shows an exemplary system according to another embodiment of the present disclosure.

### Detailed description

The present invention will now be described more fully hereinafter with reference to the accompanying drawings, in which currently preferred embodiments of the invention are shown. This invention may, however, be embodied in many different forms and should not be construed as limited to the embodiments set forth herein. Rather, these embodiments are provided for thoroughness and completeness, and to convey the scope of the invention to the skilled person.

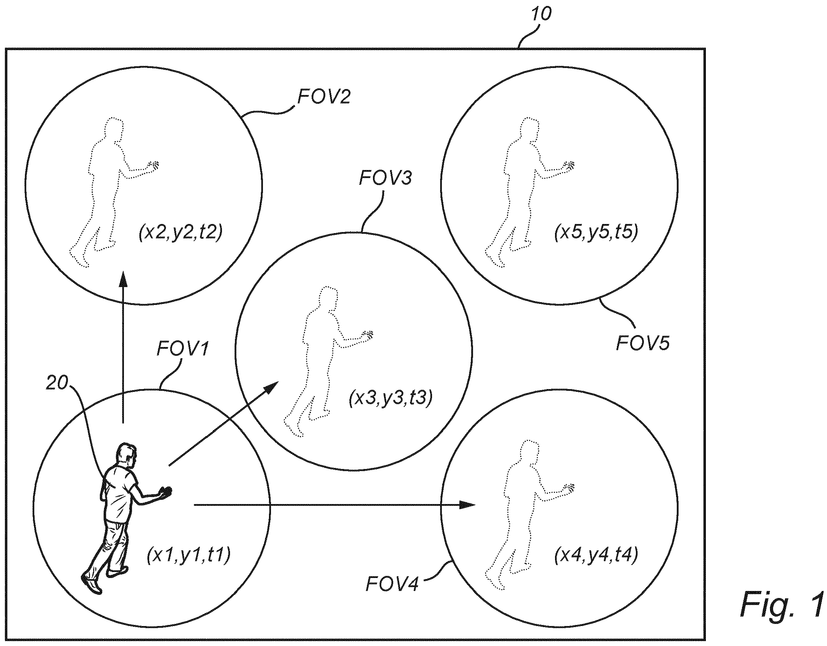

Figure 1 illustrates an embodiment of the present invention, in which a plurality of cameras are arranged to monitor a scene or environment 10. The cameras may be spatially or geographically distributed such that their respective field of view cover at least partly different regions of the scene 10. The fields of view may be partly overlapping or separate depending on the configuration of the system. In the present example illustrated in figure 1, the fields of view are indicated by regions FOV1-FOV5, with the first field of view FOV1 indicating the field of view of a first camera of the system, the second field of view FOV2 indicated the field of view of a second camera of the system, etcetera.

Each camera of the plurality of cameras may be operable in at least three different modes: a low-energy mode with no pre-buffering or pre-buffering at a reduced image stream quality, a pre-event buffering mode for temporarily storing a pre-event image stream, and a recording mode for recording an event image stream. A camera may be configured to switch between the different modes in response to a trigger. The recording mode may for instance be initiated in response to an event being detected at the camera, whereas a switch from the low-energy mode to the pre-event buffering mode may be triggered by an event being detected at another camera of the system. In case the event triggering the recording mode corresponds to the event triggering the pre-event buffering, for instance originating from the same object appearing in the field of view of the respective cameras, the temporarily stored pre-event image stream may provide information about the monitored scene 20 originating from a period preceding the detection of the event at the camera. Or, in different words, provide information about what happened before the event was detected at the camera. The pre-event image stream, or at least a part of it, and the event image stream recorded in the recording mode may then be concatenated.

A camera may be operated in the pre-event buffering mode either by initiating the temporary storing of the pre-event image stream or by increasing an image stream quality of (an already present) pre-buffer image stream, depending on the initial operating state (i.e., the low-energy mode) of the camera. Thus, entering the pre-event buffering mode may involve slightly different actions depending on the initial operating state of the camera. If the camera in its initial state is not generating a pre-event image stream, the pre-event buffering mode may be entered by initiating the temporary storing. If the camera in the initial operating state already is generating a pre-buffer image stream, entering the pre-event buffering mode may involve increasing the frame rate and/or resolution of the pre-buffer image stream.

Whether to operate a camera in the pre-event buffering mode or not may be determined based on event detections at other cameras of the system. Thus, in response to an event being detected a first camera of the plurality of cameras, a second camera of the plurality of cameras may be selected and operated in the pre-event buffering mode. With reference to figure 1, the event may be exemplified by a person or object 20 present in the field of view FOV1 of the first camera. The event may for instance correspond to the object 20 being detected in the field of view FOV1, the object 20 entering or appearing the in the field of view FOV1, or the object 20 performing an action which can be detected by the monitoring system.

The detection of an event at the first camera may now trigger a selection of a second camera of the plurality of cameras, which is to be instructed to enter the pre-event buffering mode. The second camera may be selected in several different ways, of which a few will be discussed in the following. In the context the present application, the term "first camera" is used to denote the camera at which an event is detected and the term "second camera" to denote one or several other cameras in which the detected event triggers a switch to the pre-event buffering mode. It will hence be appreciated that the definition of the terms "first camera" and "second camera" may vary from time to time depending on where in the monitored scene an event is detected and for which camera(s) the pre-event buffering mode is activated.

Further, it can be noted that the detection of an event at the first camera may not always result in a trigger of the pre-event buffering mode at the second camera. The pre-event buffering mode may for instance be initiated only for certain types or classes of events, or for events estimated to actually appear at any of the other cameras of the system. In case the event belongs to a type considered to be of less interest for the monitoring or is determined to leave the scene without transitioning from the field of view of the first camera into the field of view of any other camera of the system, it may be determined to not initiate the pre-event buffering mode at any of the other cameras. To illustrate the underlying concept a monitoring system may be considered, which is arranged to monitor events relating to the object class "vehicle". Events associated with other object classes, such as "animal", may hence be of less interest. Thus, the detection of an event associated with the object type "cat" may be determined as less interesting and therefore not result in a trigger of a pre-event buffering mode at a second camera of the system.

Whether to trigger the pre-event buffering mode or not may hence be determined based on a level of interest of the event. An event having a determined level of interested exceeding a predetermined threshold may for instance result in an instruction to the second camera to enter the pre-event buffering mode, whereas events having a determined level of interest below the threshold may not. A similar reasoning applies to the quality of the pre-event image stream once the pre-event buffering mode is triggered. The quality of the pre-event image stream may be based on the determined level of interest of the event detected at the first camera, such that the quality may be higher for a highly interesting event and lower for a less interesting event. The level of interest may for instance be based on class or timing of an object associated with the event. Objects belonging to the class "human" may for instance be determined more interesting than objects determined as "non-human", and objects appearing in the scene at certain times of the day, week or year may be determined more interesting than other objects.

It will be appreciated that in some embodiments the probability of an event, detected in the field of view FOV1 of a first camera, appearing in the field of view FOV2-FOV5 of each of the remaining cameras may be combined with the determined level of interest of the detected event, as discussed above. This may for instance be performed by multiplying the corresponding values of the probability and the level of interest, thereby providing a combined parameter that can be used as input when determining which camera (if any) to operate in the pre-event buffering mode and, if so, with which quality the pre-event image stream should be generated. In this way the quality of the pre-event image stream at the second camera may be increased to match the level of interest of the event as well as the probability that the event will appear at the second camera.

In an option, the probability of the event appearing in the field of view FOV2, FOV3, FOV4, FOV5 of each of the remaining cameras of the plurality of cameras may be determined and the second camera selected as the one having the highest probability. The probability may be determined based on a predetermined transition probability map associated with the event, indicating the probability of the event transitioning from the field of view FOV1 of the first camera into the field of view FOV2-FOV5 of another camera. The probability map may, for instance, be formed by rasterizing the field of view FOV1 of the first camera into a matrix, of which each element indicates the probability of the event transitioning into the field of view FOV2-FOV5 of the cameras of the system. The transition probability map may for instance be based on data from previous detections of similar events and historical or statistical information, from which the probability of the event detected at the first camera appearing in the field of view FOV2-FOV5 of the other cameras may be determined. Such data may for instance comprise information indicating previous locations of an object 20 in the respective fields of view FOV1-FOV5 of the plurality of cameras. The data may comprise geospatial data or information about the location of the object relative the different cameras, as well as chronological data. In the present figure the data is exemplified with spacetime coordinates (x1, y1, t1), (x2, y, t2) ... (x5, y5, t5) from which the location of the event can be determined as a function of time. Data from previous observations of events may serve as training data in a machine learning approach, in which a deep learning model is trained to determine the probability of a detected event in field of view FOV1 of the first camera occurring in the respective field of view FOV2-FOV5 of the other cameras. The estimated time of arrival at each of the fields of view FOV2-FOV5 may also be determined. The probability of the event appearing at a camera may be expressed as a percentage, and the camera instructed to enter the pre-event buffering mode in response to the percentage exceeding a predetermined threshold. This camera may then be referred to as a second camera.

The selection of the second camera may vary over time and with the type of events. Which one of the cameras to select as the second camera may for instance vary as an object associated with the event moves in the scene. The assessment of which camera to select as the second camera may preferably be performed continuously as the event is tracked in the scene.

In case the estimated time of arrival is determined, the second camera may be instructed to operate in the pre-event buffering mode during a predetermined period preceding the estimated time of arrival (and, possibly, a predetermined period succeeding the estimated time of arrival, should the event not be detected in the field of view FOV2 of the second camera at the estimated time of arrival).

As previously mentioned, the probability of the event appearing at another camera of the system may be determined by means of machine learning involving training a model, often referred to as a deep learning model. The deep learning model may be based on a set of algorithms that are designed to model abstractions in data by using a number of processing layers. The processing layers may be made up of non-linear transformations, wherein each processing layer may transform the data before passing the data to a subsequent processing layer. The transformation of data may be performed by weights and bias of the processing layer. The processing layers may be fully connected. Deep learning models may include, as an example and not by way of limitation, neural networks and convolutional neural networks. Convolutional neural networks may be made up of a hierarchy of trainable filters, interleaved with non-linearities and pooling. Convolutional neural networks may be used in large-scale object recognition tasks.

The input to the deep learning model may be surveillance or monitoring data from the system 100, such as, in the present example indicated in figure 1, image data from the fields of view FOV1-FOV5.

The probability map may be configured to take type or classification of the event or object into account when determining the transition probability. This can be illustrated by the specific and non-limiting examples of the object types "cat" and "car". As the two object types can be assumed to take different paths through a scene 10 (cars are generally depending on roads whereas cats can move more freely through terrain), conclusions can be made about probable paths through the scene based on the object type and the characteristics of the scene 20. The probability may be determined based on object type alone, assuming that a car for example may follow a road or based on previous observations of routes taken by the object type "car".

For some monitoring systems, information regarding the geospatial location of each camera (or its field of view) may be taken into consideration when determining the probability of the event appearing at a camera. This may be particularly beneficial in cases where the geography of the scene can be analyzed to acquire information about possible trajectories of an object detected at the first camera. An example would be a parking lot or a road, wherein a possible path of a vehicle may be correlated to the location of the cameras to estimate if and when the vehicle could be expected at a respective camera. However, other configurations of the monitoring system are also conceivable, in which information about the location of the cameras are less important or disregarded when determining the probability of the event appearing at a camera. The probability may instead be determined based on statistical analyses of previously observed events at different cameras, irrespectively of their relative or absolute location in the scene. By analyzing historic data indicating observed locations or trajectories of previously detected events, the probability of a specific type or class of event appearing at a specific camera can be determined using statistical methods.

In another option, the probability of the event appearing the field of view of a camera may be determined based on a velocity with which an object 20 associated with the event moves in the field of view FOV1 of the first camera. By determining the speed and direction of travel of the object 20 in the field of view FOV1 of the first camera it can be estimated to which of the other fields of view FOV2-FOV5 the object will transition, and if so, also when it can be assumed to happen.

In further options, the transition probability indicating if, and possibly when, the detected event appears in a next field of view FOV2-FOV5 may be determined based on a location of the event in the field of view FOV1 of the first camera. The probability of the event appearing at another one of the fields of view FOV2-FOV5 can be determined based on the distance between the detected event and each of the other fields of view FOV2-FOV5, for instance assuming that it is most probable that the event next appears in the field of view being closest to the detected event.

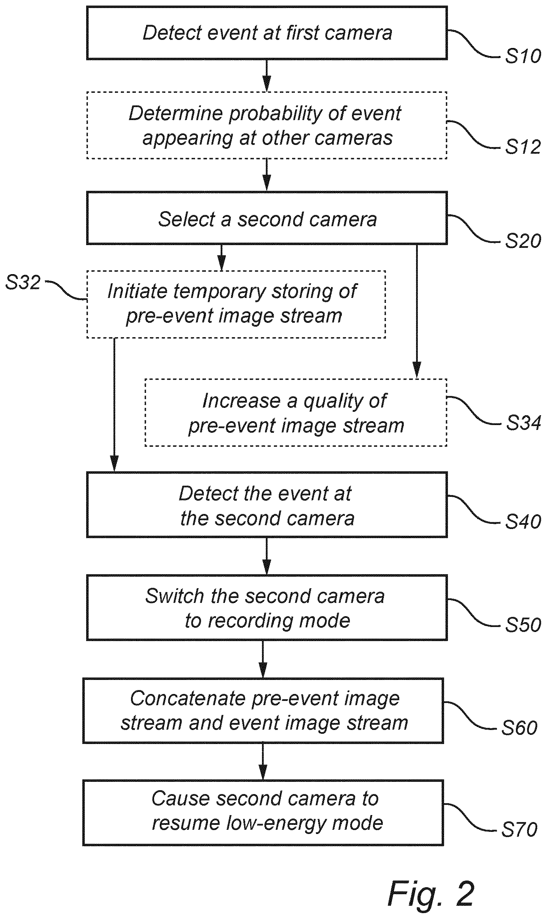

Figure 2 shows a flow chart of embodiments of a method in a monitoring system 100 as mentioned above. The system comprises a plurality of cameras operable in a low-energy mode, a pre-event buffering mode, and a recording mode. The method may comprise the acts of detecting S10 an event at a first camera of the system and selecting S20 a second camera in response to the detected event. The selecting S20 may optionally be based on the act of determining S12 a probability of the detected event appearing also in the field of view of each of the plurality of cameras and selecting S20 the second camera based on the determined probability. The selected second camera may be operated in the pre-event buffering mode by initiating S32 temporary storing of the pre-event image stream in a pre-buffer, or by increasing S34 an image stream quality of the pre-event image stream. One or both of these steps S32, S34 may be performed in the pre-event buffering mode.

Further, the method may comprise the act of detecting S40 an event in the field of view of the second camera, which triggers a switching S50 of the camera into the recording mode to generate an event image stream. The event may preferably be the same event as the one detected at the first camera, for instance relating to the same object or action. However, the second camera may also be triggered to enter the recording mode in response to the detection of another event, different from the event detected at the first camera.

In a further step the pre-event image stream may be concatenated S60 into the event image stream, such that the combined image stream comprises information of the scene acquired both before and after the event was detected at the second camera. Thereafter, the second camera may go back S70 to an initial state, such as a low-energy mode, in which the recording and the pre-buffering is stopped or at least performed at a reduced image stream quality to conserve power. The initial state may be resumed S70 in response to a trigger, such as the event disappearing from the field of view of the second camera or after a predetermined lapse of time. Alternatively, the second camera may switch from the recording mode to the pre-event buffering mode, for instance based on an event being detected at the first camera, which may be different from the camera at which the previous event was detected.

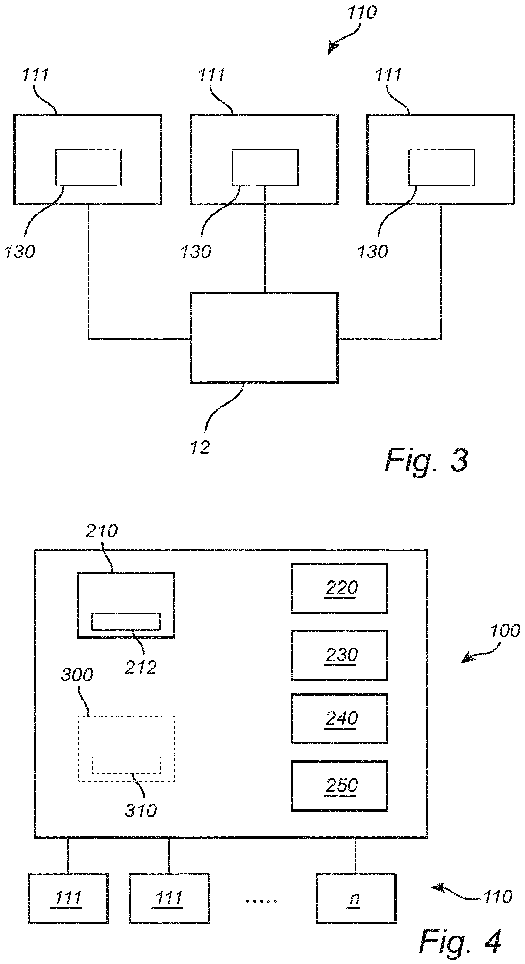

Figure 3 is a schematic block diagram of embodiments of a monitoring system which may be similarly configured as the system discussed above with reference to figures 1 and 2. The system may comprise a plurality of image capturing devices, or cameras 110, configured to capture a video of a monitored scene. Each camera 111, 112, 113 of the plurality of cameras 110 may comprise a memory, or pre-buffer 130, for temporary storing of the pre-event image stream captured when the camera is operated in the pre-event buffering mode. The pre-buffer 130 may be implemented as a relatively limited memory area configured to be overwritten when full. Thus, the size, or available capacity of the pre-buffer 130 may in some implementations define the length of the pre-event buffer image stream. The pre-buffer 130 may, for instance, be configured to store the last 30 seconds of the pre-event buffer image stream and overwrite image frames being older than 30 seconds with new ones. The pre-buffer 130 may be individual for each camera or common for two or more cameras. Further, the pre-buffer 130 may be structurally integrated in a camera or structurally separate, such as arranged remotely from the camera.

As further indicated in figure 3, each camera 111, 112, 113 may be communicatively connected to a client or video management system 120, to which the event image stream captured in the event recoding mode may be transmitted together with the pre-event image stream preceding the detection of the event at the camera. As mentioned above, the recorded image data (generally including the pre-buffer image data) may alternatively be stored in a local storage and transmitted at a later time. This may be particularly beneficial in case the second camera is a portable camera, such as a body worn camera, as power may be saved by not transmitting image data while operating on battery. The event image stream and the prepended pre-event image stream may be transmitted either wirelessly or by a wired communication channel to the video management system 120.

Figure 3 may also be used to illustrate a slightly different implementation of the present inventive concept, in which the method involves a portable camera, such as a body worn camera or a mobile phone camera. The underlying rationale would be to employ the selective pre-buffer concept described above to reduce power consumption and storage utilization in portable devices, in which such resources may be limited. The portable camera, for example represented by camera 111 in figure 3, may be a geo location and direction aware body worn camera operable in the low-energy mode, the pre-event buffering mode, and the recording mode similar to what has been described above. The other cameras, represented by the cameras 112 and 113, may be geo location and direction aware, fixedly mounted cameras.

In an example, the portable camera 111 and at least one of the fix cameras 112, 113 are covering the same field of view. This may for instance be determined by means of an image analysis method in which the similarity between the monitored scenes is determined. Alternatively, or additionally, the similarity is determined based on location and direction of the respective cameras 111, 112, 113. This data can be used to determine if the portable camera 111 and at least one of the fix cameras 112, 113 are viewing the same scene, or at least partly overlapping the same scene. In case an overlap is determined, the portable camera 111 may be operated in the low-energy mode with no pre-buffer, or with a pre-buffer of low image stream quality, to conserve battery power and save storage space.

The quality of the pre-event image stream may be determined based on how well the field of view of the portable camera 111 and the field of view of the fix camera 112, 113 matches. If the two fields of view are identical or very close to identical, the pre-buffering may be switched of and the portable camera 111 assume the low-energy mode. Should the overlap decrease, the pre-event buffering may be started but with a reduced image stream quality. Should the overlap decrease further, possibly to a degree where there is no overlap at all, the portable camera 111 may switch from the low-energy mode to the pre-event buffering mode in which the pre-event buffering is initiated or, in case the pre-buffer already is present, the quality of the pre-event image stream is increased. The quality of the pre-event image stream may be dynamic (with respect to, e.g., frame rate, resolution, number of frames, number of seconds in the pre-buffer) in the pre-event buffering mode and may vary with the degree of overlap, or matching, between the field of view of the portable camera 111 and any of the fix cameras 112, 113.

Figure 4 is a schematic block diagram of embodiments of a monitoring system 100 comprising a plurality of cameras 110 (in the present example n cameras) arranged to monitor a scene or environment. The monitoring system 100 may be similarly configured as the systems disclosed in connection with figures 1-3. The monitoring system 100 may comprise circuitry 210 configured to execute functions of the monitoring system 100, such as actions described in relation to the method steps in figure 2. The circuitry 210 may include a processor 212, such as a central processing unit (CPU), microcontroller, or microprocessor. The monitoring system 100 may further comprise a non-transitory computer-readable storage medium, such as a non-volatile memory 300. In a typical arrangement, the memory 300 may include a non-volatile memory for long term data storage and a volatile memory that functions as system memory for the circuitry 210. The memory 300 may exchange data with the circuitry 210 over a data bus. Accompanying control lines and an address bus between the memory 300 and the circuitry 210 may also be present. The memory 300 may comprise instructions 310 in the form of program code configured to carry out the functions of the monitoring system 100 when executed by the processor 212. The memory 300 may further include a storage area (not shown) for recorded image data, such as a fix or a removable storage card, in addition to the pre-buffer 130 indicated in figure 3. The storage area and as well as the pre-buffer 130 may be physically located within each of the cameras 111, 112, 113.

The functions of the monitoring system 100 may for example comprise an event detecting function 220 for detecting an event at the first camera 111 of the system 100. The event detecting function 220 may for example involve object detection or object recognition in image frames captured by the first camera 111 with the purpose of detecting or identifying an object or event in the field of view of the first camera. An object or person appearing in the field of view may be an example of such an event. An object or person performing a specific action, such as moving behaving in an unexpected manner, may also be an example of an event. The event detecting function 220 may be configured to determine a location of the event in the field of view of the first camera 111, and further to determine type or class of an object associated with the event.

In some implementations, the event detecting function 220 may be configured to determine an overlap (if any) between the field of view of a portable camera and another camera of the system, thereby allowing for the pre-event buffering mode to be activated based on a field of view matching approach rather than a detected event. In case there is a non-negligible or complete overlap in the fields of view of the portable camera and another camera of the system, such as another portable camera or a fixedly installed camera, the portable camera may be caused to operate in the low-energy mode and rely on the other camera for the monitoring.

The functions of the monitoring system 100 may further comprise a probability determining function 250 configured to determine a probability of the event being detected at another camera of the system 100. The probability determining function 250 may for instance determine a transition probability map as discussed above in connection with figure 1 and may operate on input from the event detecting function 220. In an example, in response to a detected event at the first camera 111 the event detecting function 220 may send information about the type of the event and its location in the field of view of the first camera 111 to the probability determining function 250. The probability determining function 250 may generate a probability of the detected type of event appearing at each of the plurality of cameras 110 of the system.

The output from the probability determining function 250 may be sent to a camera mode selecting function 230, which may be configured to cause a second camera to enter the pre-event buffering mode. The second camera 112, ..., n may be selected as the one having a determined probability exceeding a predetermined threshold. In the pre-even buffering mode the second camera 112, ..., n may initiate the pre-event image stream, and/or increasing an image stream quality thereof.

In alternative implementations, for example including a portable camera, the camera mode selecting function 230 may be configured to act on a level of overlap between the fields of view of the portable camera and another camera of the system, as determined by the event detecting function 220 described above. The camera mode selecting function may hence cause the other camera of the system to enter the pre-event buffering mode in response to a determined overlap between the field of view of the portable camera and the field of view of, for instance, another portable camera or a stationary camera.

The event detecting function 220 may further be configured to detect an event at the second camera 112 in a similar way as for the first camera 111 and send the result to the camera mode selecting function 230, which may be configured to cause the second camera 112 to switch to the recording mode in response thereto. The event at the second camera 112 may preferably, but not necessarily, correspond to the event at the first camera 111. The camera mode selecting function 230 may hence be configured to operate the second camera in at least three different modes: the low-energy mode, the pre-event buffering mode triggered by an event being detected at the first camera 111, and the recording mode triggered by the event being detected at the second camera 112.

As illustrated in figure 4 there may also be provided an image stream concatenating function 240 for concatenating at least a part of the pre-event image stream, which has been temporarily stored during the pre-event buffering mode, and the event image stream recorded in the recording mode. The combined image stream, comprising the event image stream and the pre-event image stream prepended thereto, may thereafter be stored or streamed to a central unit, such as a video management system.

A person skilled in the art realizes that the present invention is not limited to the embodiments described above. On the contrary, many modifications and variations are possible within the scope of the appended claims. Such modifications and variations can be understood and effected by a skilled person in practicing the claimed invention, from a study of the drawings, the disclosure, and the appended claims.

## Claims

1. A method in a monitoring system (100) comprising a plurality of cameras (110), wherein each camera is operable in a pre-event buffering mode for temporarily storing a pre-event image stream and in a recording mode for recording an event image stream, the method comprising:
in response to a first event being detected (S10) at a first camera (111) of the system:
selecting (S20) a second camera (112) of the plurality of cameras; and
operating the second camera in the pre-event buffering mode by:
initiating (S32) the temporary storing of the pre-event image stream, or
increasing (S34) an image stream quality of the pre-event image stream; and
in response to a second event being detected (S40) at the second camera:
switching (S50) the second camera to the recording mode to generate an event image stream, and
concatenating (S60) at least a part of the pre-event image stream, temporarily stored in the pre-event buffering mode, and the event image stream recorded in the recording mode.

2. The method according to claim 1, wherein increasing the image stream quality of the pre-event image stream comprises increasing a frame rate of the pre-event image stream or increasing a resolution of the image frames of the pre-event image stream.

3. The method according to claim 1 or 2, wherein the second event corresponds to the first event, the method further comprising:
determining a probability of the first event appearing in the field of view (F) of each of the plurality of cameras; and
selecting the second camera based on the determined probability.

4. The method according to claim 3, wherein the probability of the first event appearing in the field of view of each of the plurality of cameras is determined based on at least one of:
a predetermined transition probability map associated with the first event, wherein said map indicates the probability of said first event transitioning from the field of view of the first camera into the field of view of another camera of the plurality of cameras;
a velocity with which an object associated with the first event moves in the field of view of the first camera; and
a location of said object in the field of view of the first camera.

5. The method according to any of the preceding claims, wherein the second event corresponds to the first event, the method further comprising:
determining an estimated time of appearance of the first event in the field of view of the second camera; and
operating the second camera in the pre-event buffering mode for a predetermined period of time preceding the estimated time of appearance.

6. The method according to claim 5, wherein the estimated time of appearance of the first event in the field of view of the second camera is determined based on at least one of:
a predetermined probability distribution of arrival times of the first event appearing in the field of view of the second camera;
a velocity with which an object associated with the first event moves in the field of view of the first camera; and
a location of said object in the field of view of the first camera.

7. The method according to claim 1, further comprising:
determining a level of interest of the first event detected at the first camera, and
performing the temporary storing of the pre-event image stream during a period of time based on the determined level of interest, or
increasing the image stream quality of the pre-event image stream to a level based on the determined level of interest.

8. The method according to claim 1, wherein the second event corresponds to the first event, the method further comprising:
determining a probability map comprising a probability of the first event appearing in the field of view of each of the cameras of the plurality of cameras; and
selecting the second camera based on the probability map;
wherein the probability map is determined based on data from previously recorded event image streams acquired by the plurality of cameras of the system.

9. The method according to claim 8, wherein the probability map further comprises an estimated time of appearance, if any, of the first event in the field of view of each of the cameras of the plurality of cameras.

10. The method according to claims 8 or 9, wherein the probability map is determined by means of a deep learning model trained on the data from the previously recorded event image streams.

11. The method according to any of the preceding claims, further comprising:
in the pre-event buffering mode, storing at least a part of the pre-event image stream to a pre-buffer; and
in the recording mode, transmitting said at least a part of the pre-event image stream and the event image stream to a video management system.

12. The method according to claim 11, wherein further comprising prepending said at least a part of the pre-event image stream to the event image stream.

13. A monitoring system (100) comprising a plurality of cameras (110), wherein each camera is operable in a pre-event buffering mode for temporarily storing a pre-event image stream in a pre-buffer (130) and in a recording mode for recording an event image stream, the monitoring system comprising circuitry (210) configured to execute:
an event detecting function (220) configured to detect a first event at a first camera of the system;
a camera mode selecting function (230) configured to:
in response to the event detecting function detecting the first event at the first camera, operate a second camera of the system in the pre-event buffering mode in which the temporary storing of the pre-event image stream is initiated, or in which an image stream quality of the pre-event image stream is increased, and
in response to the event detecting function detecting a second event at the second camera, operate the second camera in the recording mode to generate an event image stream;
wherein the circuitry is further configured to execute:
an image stream concatenating function (240) configured to concatenate at least a part of the pre-event image stream, temporarily stored in the pre-event buffering mode, and the event image stream recorded in the recording mode.

14. The system according to claim 13, wherein:
the second event corresponds to the first event;
the circuitry is further configured to execute a probability determining function (250) configured to determine a probability map comprising a probability of the first event being detected at each of the cameras of the plurality of cameras; and
the camera mode selecting function is further configured to operate the second camera based on the probability map.

15. A non-transitory computer-readable medium having stored thereon computer code instructions adapted to carry out the method of any of claims 1-12 when executed by a device having processing capability.

## Amended claims

### Amended claims in accordance with Rule 137(2) EPC.

1. A method in a monitoring system (100) comprising a plurality of cameras (110), wherein each camera is operable in:
a pre-event buffering mode wherein the camera temporarily stores a pre-event image stream in a pre-buffer configured to be overwritten when full,
a recording mode wherein the camera stores an event image stream for transmission to a video management system, and
a standby mode wherein the camera does not store an image stream or wherein the camera temporarily stores a pre-event image stream in the pre-buffer at a reduced image stream quality,
the method comprising:
in response to a first event being detected (S10) at a first camera (111) of the system:
selecting (S20) a second camera (112) of the plurality of cameras based on a probability of a second event being in the field of view of the second camera, the second event corresponding to the first event; and
causing the second camera to enter the pre-event buffering mode from the standby mode;
in response to the second event being detected (S40) at the second camera:
causing (S50) the second camera to enter the recording mode to thereby generate an event image stream, and
concatenating (S60) at least a part of the pre-event image stream stored in the pre-buffer associated with the second camera, and the event image stream recorded by the second camera in the recording mode.

2. The method according to claim 1, wherein increasing the image stream quality of the pre-event image stream comprises increasing a frame rate of the pre-event image stream or increasing a resolution of the image frames of the pre-event image stream.

3. The method according to claim 1 or 2, further comprising:
determining a probability of the first event appearing in the field of view (F) of each of the plurality of cameras; and
selecting the second camera based on the determined probability.

4. The method according to claim 3, wherein the probability of the first event appearing in the field of view of each of the plurality of cameras is determined based on at least one of:
a predetermined transition probability map associated with the first event, wherein said map indicates the probability of said first event transitioning from the field of view of the first camera into the field of view of another camera of the plurality of cameras;
a velocity with which an object associated with the first event moves in the field of view of the first camera; and
a location of said object in the field of view of the first camera.

5. The method according to any of the preceding claims, further comprising:
determining an estimated time of appearance of the first event in the field of view of the second camera; and
operating the second camera in the pre-event buffering mode for a predetermined period of time preceding the estimated time of appearance.

6. The method according to claim 5, wherein the estimated time of appearance of the first event in the field of view of the second camera is determined based on at least one of:
a predetermined probability distribution of arrival times of the first event appearing in the field of view of the second camera;
a velocity with which an object associated with the first event moves in the field of view of the first camera; and
a location of said object in the field of view of the first camera.

7. The method according to claim 1, further comprising:
determining a level of interest of the first event detected at the first camera,
and
performing the temporary storing of the pre-event image stream during a period of time based on the determined level of interest, or
increasing the image stream quality of the pre-event image stream to a level based on the determined level of interest.

8. The method according to claim 1, further comprising:
determining a probability map comprising a probability of the first event appearing in the field of view of each of the cameras of the plurality of cameras; and
selecting the second camera based on the probability map;
wherein the probability map is determined based on data from previously recorded event image streams acquired by the plurality of cameras of the system.

9. The method according to claim 8, wherein the probability map further comprises an estimated time of appearance, if any, of the first event in the field of view of each of the cameras of the plurality of cameras.

10. The method according to claims 8 or 9, wherein the probability map is determined by means of a deep learning model trained on the data from the previously recorded event image streams.

11. The method according to claim 1, wherein further comprising prepending said at least a part of the pre-event image stream to the event image stream.

12. A monitoring system (100) comprising a plurality of cameras (110), wherein each camera is operable in:
a pre-event buffering mode wherein the camera temporarily stores a pre-event image stream in a pre-buffer (130) configured to be overwritten when full,
a recording mode wherein the camera stores an event image stream for transmission to a video management system, and
a standby mode wherein the camera does not store an image stream or wherein the camera temporarily stores a pre-event image stream in the pre-buffer at a reduced image stream quality,
the monitoring system comprising circuitry (210) configured to execute:
an event detecting function (220) configured to detect a first event at a first camera of the system;
a camera mode selecting function (230) configured to:
in response to the event detecting function detecting the first event at the first camera, cause a second camera of the system to enter the pre-event buffering mode,
wherein the second camera is selected based on a probability of a second event being in the field of view of the second camera, the second event corresponding to the first event, and
in response to the event detecting function detecting the second event at the second camera, cause the second camera to enter the recording mode to thereby generate an event image stream;
wherein the circuitry is further configured to execute:
an image stream concatenating function (240) configured to concatenate at least a part of the pre-event image stream stored in the pre- buffer associated with the second camera, and the event image stream recorded by the second camera in the recording mode.

13. The system according to claim 12, wherein:
the second event corresponds to the first event;
the circuitry is further configured to execute a probability determining function (250) configured to determine a probability map comprising a probability of the first event being detected at each of the cameras of the plurality of cameras; and
the camera mode selecting function is further configured to operate the second camera based on the probability map.

14. A non-transitory computer-readable medium having stored thereon computer code instructions adapted to carry out the method of any of claims 1-11 when executed by a device having processing capability.
